# EUROPÄISCHE PATENTSCHRIFT

(11) **EP 1 292 641 B1**
(45) Veröffentlichungstag und Bekanntmachung des Hinweises auf die Patenterteilung: **03.10.2007**
(21) Anmeldenummer: 01907569.6
(22) Anmeldetag: 26.02.2001
(51) Int. Cl.: C08L 77/00, C08K 7/00

(54) **Verwendung von Polyamid Mischungen**
Use of polyamide compositions
Utilisation de compositions de polyamide

(30) Priorität: 09.03.2000 DE 10011128; 25.04.2000 DE 10020164; 28.08.2000 DE 10042176
(43) Veröffentlichungstag der Anmeldung: 19.03.2003
(73) Patentinhaber: LANXESS Deutschland GmbH, 51369 Leverkusen (DE)
(72) Erfinder: JOACHIMI, Detlev, 47800 Krefeld (DE); SCHULTE, Helmut, 47803 Krefeld (DE); LITTEK, Wolfram, 42699 Solingen (DE); KADELKA, Jürgen, 47829 Krefeld (DE)
(86) Internationale Anmeldenummer: PCT/EP2001/002211
(87) Internationale Veröffentlichungsnummer: WO 2001/066643

(56) Entgegenhaltungen:
- EP-A- 0 279 578
- EP-A- 0 361 769
- EP-A- 0 392 602
- EP-A- 0 685 528
- DATABASE WPI Section Ch, Week 199412 Derwent Publications Ltd., London, GB; Class A17, AN 1994-097992 XP002166443 & JP 06 049352 A (TONEN SEKIYU KAGAKU KK), 22. Februar 1994 (1994-02-22)

## Beschreibung

Die Erfindung betrifft die Verwendung thermoplastischer Formmassen, hergestellt aus einer Mischung enthaltend aliphatisches Polyamid und/oder Copolyamid, Füllstoffe und Verstärkungsstoffe, di- oder mehrfunktionelle verzweigend und/oder polymerkettenverlängernd wirkende Additive, Modifikator sowie sonstige nicht verzweigende und nicht polymerkettenverlängernde Additive.

Extrusionsblasfähiges glasfaserverstärktes Polyamid 66, das Verarbeitbarkeit und Hydrolysestabilität aufweist, die für Hohlkörper im Kühlkreislauf geeignet wären, ist bisher nicht bekannt. Eingesetzt wird z.T. blasfähiges PP, dessen Hydrolysebeständigkeit/Thermobeständigkeit jedoch unbefriedigend ist. Blasfähige PA-Typen basieren in den meisten Fällen auf PA6, das für Anwendungen mit Kontakt zu Kühlmedium weniger gut als PA66 geeignet ist (EP-B 0 868 499). Zur Beurteilung der Hydrolysebeständigkeit werden üblicherweise genormte Prüfkörper (z.B. Zugstäbe oder 80x10x4mm³-Stäbe) in Kühlmedium (z.B. in Ethylenglykol/Wasser 1/1 bei 130°C/2 bar im Autoklaven) gelagert und nach bestimmten Intervallen mechanischen Prüfungen (Zugversuch, Biegeversuch, Schlagbiegeversuch) unterzogen.

Für Extrusionsblasfähigkeit wird eine möglichst hohe Viskosität bei niedrigem Schergefälle benötigt. Derartig hohe Viskositäten lassen sich bei glasfaserverstärktem PA66 z.B. durch Festphasennachkondensation linearer PA66-Compounds erzielen, d.h., es wird ein PA66 mittlerer Viskosität mit z.B. 25 % Glasfaser auf einem Zweiwellenextruder compoundiert, und das erhaltene Granulat wird anschließend einer Nachkondensation in der Festphase unterzogen. Dies kann z.B. in einem Vakuumtaumeltrockner oder in einem kontinuierlichen Inertgastrockner unter dem Fachmann vertrauten Bedingungen erfolgen. Der Einsatz von hochviskosem unverstärktem PA66 als Basisharz bei der Compoundierung führt normalerweise nicht zu den erwünschten hochviskosen Materialien, da es durch die hohen Scherkräfte und Temperaturen im Extruder zu Molekulargewichtsabbau und damit zur Viskositätsreduzierung kommt.

Eine andere Möglichkeit, um zu hochviskosem PA66 zu gelangen, ist der Einbau von Langkettenverzweigungen durch reaktive Extrusion, wie er z.B. für glasfaserverstärktes PA6 in EP-A 685 528 beschrieben wurde. Die Übertragung dieses Verfahrens der Verzweigung mittels Bisphenol A - Diglycidylether oder mit ähnlichen Verzweigern auf glasfaserverstärktes PA66 führt zwar ebenfalls zu hochviskosem extrudierbarem PA66, die Oberflächenqualität und Quetschnahtfestigkeit aus derartigen Compounds extrusionsblasgeformter Hohlkörper sind jedoch für die meisten technisch relevanten Anwendungen nicht ausreichend.

Die Beurteilung der Extrusionsblasfähigkeit anhand von Materialkennwerten ist meist nur bedingt möglich. Wesentlich praxisnäher sind Extrusionsversuche, bei denen Schmelzeschläuche unter konstanten Bedingungen aus einer Ringdüse senkrecht nach unten extrudiert werden und das Auslängen der Schmelzeschläuche beobachtet wird. Man extrudiert kontinuierlich und wertet dabei die Zeit aus, die vergeht, bis der Schmelzeschlauch eine vorgegebene Länge erreicht hat, oder man extrudiert über diskrete Zeiten und beobachtet die Auslängung der Schlauchabschnitte mit länger werdendem Zeitintervall. Vergleichsmaßstab ist in beiden Fällen die Länge, die der Schlauch unter idealen Bedingungen ohne Auslängung oder Schrumpfung haben würde.

Für die Fertigung von Hohlkörpern im Extrusionsblasformverfahren sollte ein extrusionsblasfähiges glasfaserverstärktes PA66 zur Verfügung gestellt werden, das gleichzeitig durch gute Beständigkeit gegen Kühlmedien (z.B. Ethylenglykol/Wasser 1/1) und gute Oberflächenqualität für Anwendungen im Kfz-Kühlkreislauf geeignet ist.

Überraschend wurde gefunden, dass hochviskose glasfaserverstärkte Compounds mit guter Hydrolysebeständigkeit und guter Oberflächenqualität zugänglich sind durch Compoundierung von PA66 mittlerer Viskosität mit Glasfasern, wobei Verzweiger/Kettenverlängerer (z.B. Bisphenol A-Diglycidylether) in Gegenwart von geringen Mengen an Elastomermodifikatoren zugesetzt werden, ggf. in Gegenwart kristallisationsverzögernder Zusätze. Die Viskosität des erhaltenen Materials ist so hoch, das eine sehr gute Verarbeitbarkeit im Blasformverfahren möglich ist und auf eine Festphasennachkondensation verzichtet werden kann. Die Compounds weisen gute Beständigkeit gegen Kühlmedium z.B. Ethylenglykol/Wasser auch noch bei 130°C auf.

Gegenstand der Anmeldung ist die Verwendung von Mischungen, enthaltend 40 bis 89,9 Gewichtsteile eines oder mehrerer aliphatischer Polyamide oder Copolyamide, 10 bis 50 Gewichtsteilen Füllstoffe und Verstärkungsstoffe, bevorzugt Glasfasern, 0,05 bis 3 Gewichtsteilen di- oder mehrfunktionellen verzweigend und/oder polymerkettenverlängemd wirkenden Additiven, 0,05 bis 5 Gewichtsteilen Elastomer modifikator und 0 bis 5 Gewichtsteile sonstiger nicht verzweigender und nicht polymerkettenverlängernder Additive, wobei die Summe der Gewichtsteile 100 ergibt, zur Verbesserung der Hydrolyse beständigkeit thermoplastischer Formmassen und daraus hergestellter Formkörper.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugt ist Polyamid-6,6. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4-und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl, 3,5,5,-trimethylcyclohexylamin, 2,5-und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie -Aminocapronsäure, -Aminoundecansäure oder -Aminolaurinsäure oder ihren Lactamen, hergestellt werden.

Die Polyamide weisen vorzugsweise eine relative Viskosität (gemessen an einer 1 gew.-%igen Lösung in *m*-Kresol bei 25°C) von 2,3 bis 4,0 besonders bevorzugt von 2,7 bis 3,5 auf.

Die erfindungsgemäß verwendeten Formmassen können sonstige, nichtverzweigende und nicht polymerkettenverlängernde Additive wie Farbmittel, Stabilisatoren (insbesondere Kupfer haltige Stabilisatoren), Gleit- und Verarbeitungshilfsmittel sowie ggf. weitere Zusatzstoffe enthalten.

Bevorzugte sonstige Additive, die zur Modifizierung der hochviskosen Polyamide geeignet sind:
- Wachse (z.B. Polyethylenwachse, Montansäureester, Amidwachse)
- weitere Salze langkettiger Carbonsäuren (z.B. Stearate und Palmitate mit Kalzium, Lithium oder Natrium als Gegenion)
- Nukleierungsmittel (z.B. Mikrotalk, Bariumsulfat, Kalziumfluorid, Phenylphosphinate, Lithiumchlorid etc.)
- Stabilisatoren, die Kupferspezies enthalten (z.B. Cul/Kaliumhalogenid-Mischungen, Cu-acetat, -stearat und/oder Komplexe mit Cu als Zentralatom; auch Kombinationen von Cu(0) mit Cu-Salzen und Alkalihalogeniden)
- Stabilisatoren vom Typ der phenolischen Antioxydantien, Phosphite, sterisch gehinderten Amine (HALS), Benzophenone
- Farbmittel (z.B. organische und anorganische Pigmente und/oder Farbstoffe; Russ, Titandioxid),
- Polyetherglykole bzw. Derivate von Polyetherglykolen, die sich von substituiertem Ethylenglykol oder Verbindungen des Ethylenglykols bzw. Polyethylenglykols ableiten
wobei diese Additive allein oder in Kombination gegebenenfalls in Form von Masterbatchen, Pulvermischungen, auch in kompaktierter oder granulierter Form, eingesetzt werden können.

Die Polyamide können zusätzlich weitere faserförmige Verstärkungsstoffe und/oder mineralische Füllstoffe enthalten. Als faserförmige Verstärkungsstoffe neben Glasfasern kommen Kohlefasern, Aramidfasern, Mineralfasern und Whisker in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Aber auch andere Oxide oder Oxidhydrate eines Elementes ausgewählt aus der Gruppe Bor, Aluminium, Gallium, Indium, Silizium, Zinn, Titan, Zirkonium, Zink, Ytrium oder Eisen können eingesetzt werden. Zur Verbesserung der mechanischen Eigenschaften können die faserförmigen Verstärkungsstoffe und die mineralischen Füllstoffe oberflächenbehandelt sein.

Bevorzugt sind Glasfasern.

Die Zugabe der Füllstoffe kann vor, während oder nach der Polymerisation der Monomere zum Polyamid erfolgen. Erfolgt die Zugabe der erfindungsgemäßen Füllstoffe nach der Polymerisation, so erfolgt sie vorzugsweise durch Zugabe zur Polyamidschmelze in einem Extruder. Erfolgt die Zugabe der erfindungsgemäßen Füllstoffe vor oder während der Polymerisation, so kann die Polymerisation Phasen umfassen, in denen in Gegenwart von 1 bis 50 Gewichtsprozent Wasser gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmassen auftretenden Partikel erst im Laufe der Zugabe bzw. Einarbeitung entstehen. Diese Vorstufen können Hilfsstoffe enthalten, die z.B. dazu dienen, die Vorstufe zu stabilisieren oder die feinteilige Verteilung der Partikel in der Formmasse zu gewährleisten. Solche Hilfsstoffe können z.B. Oberflächenmodifikatoren sein.

Als Verstärkungsstoffe kommen neben bzw. an Stelle von Glasfasern auch C-Fasern, Aramidfasern, Mineralische Füll- bzw. Verstärkungsstoffe und ähnliche Materialien in Frage. Diese können ggf. mit Oberflächenmodifizierungen z.B. Silanen oder Glasfaserschlichten versehen sein. Der Gesamtfeststoffgehalt der Füll- und Verstärkungsstoffe liegt bezogen auf die Formmasse zwischen 10 und 50 Gew.-% und besonders bevorzugt zwischen 12 und 35 Gew.-%.

Als Elastomermodifikatoren, kommen prinzipiell alle Typen in Frage, die auch sonst in PA66 eingesetzt werden können. Besonders bevorzugt ist der zusätzliche Einsatz von kautschukelastischen Polymerisaten (oft auch als Schlagzähmodifikator, Elastomer oder Kautschuk bezeichnet).

Ganz allgemein handelt es sich dabei um Copolymerisate (Copolyamide ausgenommen), die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sogenannten Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen pro 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butylider-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln (I) oder (II) oder (III) oder (IV) zum Monomerengemisch in den Kautschuk eingebaut,

R¹C(COOR²) = C(COOR³)R⁴ (I)

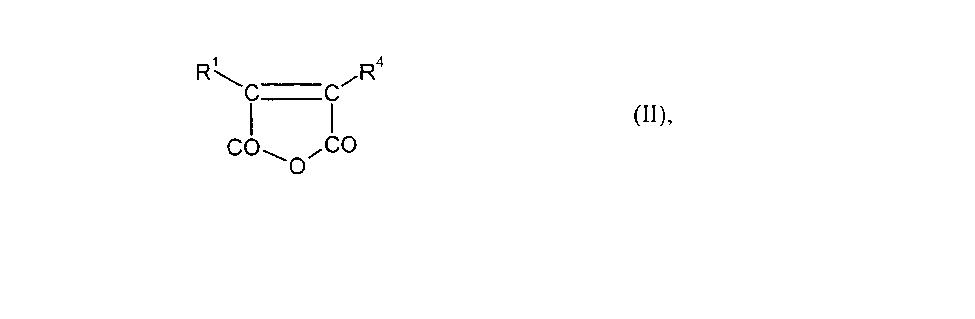

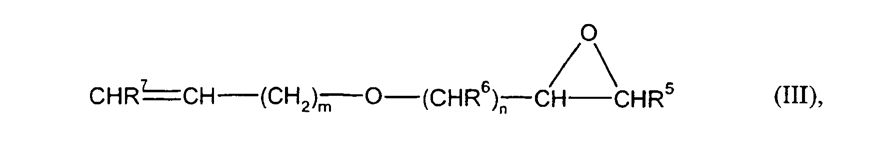

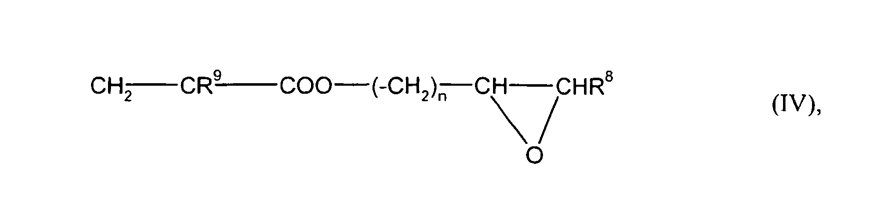

wobei R¹ bis R⁹ Wasserstoff oder Alkylgruppen mit 1 bis 6 C-Atomen darstellen und m eine ganze Zahl von 0 bis 20, und n eine ganze Zahl von 0 bis 10 ist.

Vorzugsweise bedeuten die Reste R¹ bis R⁹ Wasserstoff, wobei m für 0 oder 1 und n für1 steht. Die entsprechenden Verbindungen sind Maleinsäure, Fumarsäure, Maleinsäureanhydrid, Allylglycidylether und Vinylglycidylether.

Bevorzugte Verbindungen der Formeln (I), (II) und (IV) sind Maleinsäure, Maleinsäureanhydrid und Epoxygruppen-enthaltende Ester der Acrylsäure und/oder Methacrylsäure wie Glycidylacrylat, Glycidylmethacrylat und die Ester mit tertiären Alkoholen wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder der Glycidylmethacrylat, (Meth)acrylsäure und/oder Maleinsäureanhydrid, und
- 1 bis 45,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerisation" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacryläte, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 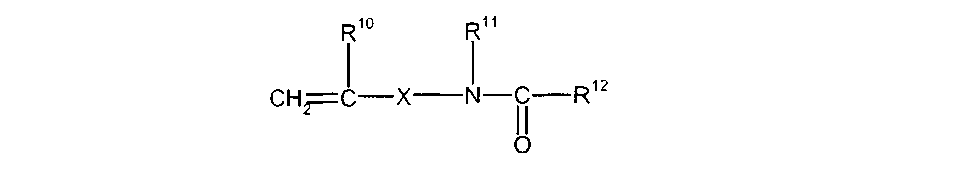 eingeführt werden können,
wobei die Substituenten folgende Bedeutung haben können:
- R¹⁰: Wasserstoff oder eine C₁ - bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³,
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen-, eine C₆- bis C ₁₂-Arylengruppe oder 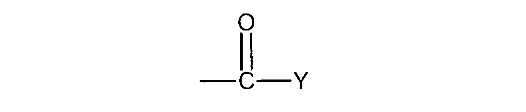
- Y: O-Z oder NH-Z und
- Z: eine C₁- bis C₁₀-Alkylen- oder eine C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktiven Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomerer; für nähere Einzelheiten sei hier beispielsweise auf die US-A 4 148 846 und US-A 4 327 201 verwiesen.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| **Typ** | **Monomere für den Kern** | **Monomere für die Hülle** |
|---|---|---|
| I | Buta-1,3-dien, Isopren, n-Butylacrylat, Ethyl-hexylacrylat oder deren Mischungen | Styrol, Acrylnitril, Methylmethacrylat |
| II | wie I, aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III, aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Besonders bevorzugt sind Elastomermodifikatoren des EPM-, EPDM- und Acrylattyps.

Als Verzweiger bzw. Kettenverlängerer kommen niedermolekulare und oligomere Verbindungen in Frage, die über mindestens zwei reaktive Gruppen verfügen, die mit primären und/oder sekundären Aminogruppen, und/oder Amidgruppen und/oder Carbonsäuregruppen reagieren können. Reaktive Gruppen können z.B. Isocyanate, ggf. blockiert, Epoxide, Maleinsäureanhydrid, Oxazoline, Oxazine, Oxazolone, u.ä. sein. Bevorzugt sind Diepoxide auf Basis Diglycidylether (Bisphenol und Epichlorhydrin), auf Basis Aminepoxidharz (Anilin und Epichlorhydrin), auf Basis Diglycidylester (cycloaliphatische Dicarbonsäuren und Epichlorhydrin) einzeln oder in Mischungen sowie 2,2-Bis[p-hydroxy-pheny]1-propan-diglycidylether, Bis-[p-(N-methyl-N-2,3-epoxy-propylamino)-phenyl]-methan. Besonders bevorzugt sind Glycidylether, ganz besonders bevorzugt BisphenolA-Diglycidylether.

Zur Verzweigung/Kettenverlängerung sind geeignet:
1. Poly- bzw. Oligoglydicyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.
   Ether dieses Typs leiten sich beispielsweise ab von acyclischen Alkoholen, wie Ethylenglykol, Diethylenglykol und höhereren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit, sowie von Polyepichlorhydrinen.
   Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-82-hydroxyethyl)-anilin oder p,p'-Bis-(2-hydroxyethyl-amino)-diphenylmethan.
   Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
2. Poly- bzw. Oligo-(N-glycidyl)-Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenyl oder N,N,O-Triglycidyl-p-aminophenol.
   Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.
3. Poly- bzw. Oligo-(S-glycidyl)-Verbindungen wie beispielsweise Di-S-glycidylderivate, die sich von Dithiolen, wie beispielsweise Ethan-1,2-dithiol oder Bis-(4-mercaptomethylphenyl)-ether ableiten.

Gegenstand der Anmeldung ist die Verwendung erfindungsgemäßer Polyamidmischungen zur Verbesserung der Hydrolyse beständigkeit von durch Schmelzecompoundierung hergestellter Formmassen. Bevorzugter Gegenstand der Anmeldung ist die Verwendung erfindungsgemäßer Formmassen, in welchen als Polyamid PA 6,6 eingesetzt wird.

Bevorzugt ist weiterhin thermoplastische Formmassen aus 60 bis 84,9 Gewichtsteile PA66 mit 15 bis 39,9 Gewichtsteilen Glasfasern, 0,05 - 2 Gewichtsteile di- oder mehrfunktionellen verzweigend und/oder polymerkettenverlängernd wirkenden Additiven, 0,05 - 3 Gewichtsteile Modifikator sowie 0 bis 5 Gewichtsteile sonstiger Additive zu verwenden.

Gegenstand der Anmeldung ist die Verwendung der erfindungsgemäßen Formmassen zur Verbesserung der Hydrolysebeständigkeit von Formkörpern. Bevorzugte Verarbeitungsverfahren zur Herstellung von Formkörpern sind das Spritzgussverfahren, Profil-Extrusionsverfahren, das Blasformen, wobei unter Blasformen besonders bevorzugt Standard-Extrusionsblasformen, 3D-Extrusionsblasformverfahren und das Saugblasformverfahren verstanden werden. Die durch die genannten Verarbeitungsverfahren herstellbaren Formkörper Formkörper sind beispielsweise: Kühlerrohre, Kühlerwasserkästen, Ausgleichsbehälter und andere Medien führende Rohre und Behälter.

### Beispiele

Die erfindungsgemäßen und die in den Vergleichsbeispielen beschriebenen Compounds wurden auf einem Zweiwellenextruder ZSK 32 der Fa. Werner & Pfleiderer unter den für glasfaserverstärktes PA 66 üblichen Compoundierbedingungen hergestellt. Das Bisphenol-A-Diepoxid wurde dabei mit einer Flüssigdosierpunpe in die PA-Schmelze dosiert. Die erhaltenen Granulate wurden vor weiterer Verarbeitung auf einen Restfeuchtegehalt von kleiner 0,06 % getrocknet und anschließend unter Formmasse-üblichen Bedingungen zu Prüfkörpern verspritzt bzw. für Viskositätsmessungen oder Extrusionsblasformversuche verwendet. Die Beständigkeit gegen Kühlmedium (Ethylenglykol/Wasser 1/1) wurde durch Lagerung von spritzgegossenen 80x10x4mm³-Stäben im Kühlmedium in einem Autoklaven und anschließenden Schlagbiegeversuch (Izod-Schlagzähigkeit) bzw. Biegeversuch geprüft. Dabei erfolgte die Lagerung immer bei 130°C/2 bar. Nach Ablauf der vorgesehenen Lagerungszeit bei 130°C wurden die Prüfkörper im Autoklaven über ca. 12 h auf Raumtemperatur abgekühlt, mit Wasser abgespült, von Oberflächenfeuchte befreit und sofort vermessen.

Das Auslängverhalten bei der Schlauchextrusion wurde mit einem Extruder des Typs Krupp-Kautex KEB 4/13 mit Schneckendurchmesser 60 mm, 25 D, Umlenkkopf, Dorn/Düse Durchmesser 40/44 mm untersucht. Folgende Heizzoneneinstellungen [°C] wurden gewählt:

| Zone 1 | Zone 2 | Zone 3 | Zone 4 | Zone 5 | Flansch | Umlenke. | Kopf o. | Kopf u. |
|---|---|---|---|---|---|---|---|---|
| 280 | 300 | 300 | 270 | 270 | 275 | 260 | 260 | 260 |

Die Schneckendrehzahl betrug 15/min, der Durchsatz ca. 20 kg/h.

Die Zusammmensetzungen der erfindungsgemäßen Beispiele und der Vergleichsbeispiele sind in Tab. 1 angegeben; Eigenschaften in Tabelle 2.

Aus Tabelle 2 wird der erfindungsgemäße Effekte deutlich:

Erfindungsgemäße Formmassen (Beispiele 4 und 5) zeigen excellente Schmelzestandfestigkeit, Quetschnaht- und Oberflächenqualität, geringe Rauigkeit, hohen Oberflächenglanz und zugleich sehr gute Hydrolysebeständigkeiten.

**Tabelle 1: Zusammensetzungen in Gew.%**

| | Beispiel 1 Vergleichsbeispiel | Beispiel 2 Vergleichsbeispiel | Beispiel 3 Vergleichsbeispiel | Beispiel 4 | Beispiel 5 | Beispiel 6 Vergleichsbeispiel |
|---|---|---|---|---|---|---|
| PA 6 ¹⁾ | | | 69,21 | | | |
| PA 66 ¹⁾ | | | | 72,76 | 72,76 | 73,96 |
| Glasfaser ²⁾ | | | 30 | 25 | 25 | 25 |
| Ruß | | | 0,16⁶⁾ | 0,16 ⁶⁾ | 0,16⁶⁾ | 0,16⁶⁾ |
| Licowax E FL ³⁾ | | | | 0,25 | 0,25 | 0,25 |
| Nigrosin ⁷⁾ | | | | 0,2 | 0,2 | |
| CuI/KBr, (1/2,8; g/g) | | | 0,13 | 0,13 | 0,13 | 0,13 |
| Bisphenol A-Diglycidylether ⁹⁾ | | | 0,5 | 0,5 | 0,5 | 0,5 |
| Modifikator | | | | 1 ⁸⁾ | 1) ¹⁰⁾ | |
| PA66GF25 ⁴⁾ Spritzgießtyp | 100 | | | | | |
| PA66GF25 ⁵⁾ Extrusionstyp | | 100 | | | | |

| | | | | | | |
|---|---|---|---|---|---|---|
| 1) Mittelviskose Typen; relative Lösungsviskosität in m-Kresol 3,0 2) Durchmesser vorzugsweise 10 - 11 µm, z.B. PPG 3660, Vetrotex P 955, Bayer CS 7928 3) Montanesterwachs von Fa. Clariant 4) z.B. Durethan AKV 25 H2.0 9005/0, Handelsprodukt der Bayer AG 5) z.B. Durethan KU 2-2228 9005/0, Versuchsprodukt der Bayer AG; durch Festphasennachkondensation auf eine relative Lösungsviskosität in m-Kresol von ca. 4,0 aufkondensiertes PA66GF25; ohne Elastomermodifikator 6) Printex 300, Ruß der Fa. DEGUSSA 7) Nigrosin, Colour Index Solvent Black 7 8) Exxelor VA 1801, EPM-Kautschuk der Fa. EXXON 9) Rütapox 0162, Bisphenol A-Diglycidylether, Bakelite AG 10) Metablen P 550 SD; Copolymer aus PMMA und anderen Acrylaten, Produkt der Metablen Company B.V.(NL) | | | | | | |

**Tabelle 2: Eigenschaften**

| | | | Beispiel 1 Vergleichsbeispiel | Beispiel 2 Vergleichsbeispiel | Beispiel 3 Vergleichsbeispiel | Beispiel 4 | Beispiel 5 | Beispiel 6 Vergleichsbeispiel |
|---|---|---|---|---|---|---|---|---|
| Relative Lösungsviskosität in m-Kresol | | | 3,1 | 4,15 | 3,7 | 3,9 | 4,0 | 3,9 |
| MVR 290°C/5kg | | cm³/min | 36 | 11 | 2,2 ¹⁾ | 3 | 3 | 4,4 |
| Schmelzeviskosität (bei 290°C Schergeschwindigkeit 10/s) | | Pa.s | 1300 | 1700 | 5200 ¹⁾ | 2800 | 2900 | 2300 |
| Schmelzestandfestigkeit ²⁾ | | | 5 | 4 | 1 | 1 | 1 | 2 |
| Quetschnahtqualität ⁵⁾ | | | n.m. ⁶⁾ | n.m. ⁶⁾ | ⁹⁾ | 1 | 1 | 5 |
| Oberflächenqualität ⁷⁾ | | | n.m. ⁶⁾ | n.m. ⁶⁾ | ⁹⁾ | 1 | 2 | 4 |
| Durchschn. Rauigkeit (Ra)¹⁰⁾ | | | | | | | | |
| | innen | µm | - | - | - | 17,59 | 20,49 | 34,25 |
| | aussen | µm | - | - | - | 10,05 | 13,23 | 15,46 |
| Maximale Rauigkeit (TIR)¹⁰⁾ | | | | | | | | |
| | innen | µm | - | - | - | 130,70 | 94,14 | 208,7 |
| | aussen | µm | - | - | - | 64,39 | 74,32 | 112,6 |
| Oberflächenglanz ⁸⁾ Messwinkel 60 ° | | | n.m. ⁶⁾ | n.m. ^{b)} | | 4,1 | 4,4 | 2,0 |
| Hydrolysebeständigkeit ³⁾ Schlagzähigkeit (ISO 180 1C) | | kJ/m² | 6 | 7 | n.m. ⁴⁾ | 17 | 15 | 12 |
| Hydrolysebeständigkeit ³⁾ Biegemodul | | MPa | 2050 | 2100 | n.m. ⁴⁾ | 2160 | 2100 | 2200 |

| | | | | | | | | |
|---|---|---|---|---|---|---|---|---|
| 1) 260°C 2) Bewertung nach Schulnotensystem: 1...sehr gut, 6...ungenügend 3) Gemessen am spritzgegossenen Probekörper 80x60x4 mm³ nach 1000 h Lagerung in Kühlmedium (Ethylenglykol/Wasser 1/1) im Autoklav bei 130°C 4) nicht messbar, da Probe durch hydrolytischen Angriff zerstört 5) Beurteilt wurde die Bodennaht einer 11-Flasche nach Schulnotensystem: 1...sehr gut, 6...ungenügend 6) nicht messbar, da aus diesem Material keine Flaschen geblasen werden konnten 7) Beurteilt wurde der optische Gesamteindruck der Außenoberfläche einer 1 1-Flasche nach Schulnotensystem: 1...sehr gut, 6...ungenügend 8) Glanzmessung nach DIN 67530 1/82 an Abschnitt aus Seitenteil einer extrusionsgeblasenen 11-Flasche 9) wurde nicht geprüft, da Hydrolysebetändigkeit nicht ausreichend 10) gemessen mit Schichtdickenmeßgerät der Fa. Tencol | | | | | | | | |

## Patentansprüche

1. Verwendung von Mischungen enthaltend 40 bis 89,9 Gewichtsteile eines oder mehrerer aliphatischer Polyamide oder Copolyamide, 10 bis 50 Gewichtsteilen Füllstoffe und Verstärkungsstoffe, bevorzugt Glasfasern, 0,05 bis 3 Gewichtsteilen di- oder mehrfunktionellen verzweigend und/oder polymerkettenverlängernd wirkenden Additiven, 0,05 bis 5 Gewichtsteilen Elastomermodifikator und 0 bis 5 Gewichtsteile sonstiger nicht verzweigender und nicht polymerkettenverlängernder Additive, wobei die Summe der Gewichtsteile 100 ergibt, zur Verbesserung der Hydrolysebeständigkeit thermoplastischer Formmassen und daraus hergestellter Formkörper.

2. Verwendung gemäß Anspruch 1 **dadurch gekennzeichnet, dass** die Formmassen und die daraus hergestellten Formkörper durch Schmelzcompoundierung in einem Extruder hergestellt werden.

3. Verwendung gemäß Anspruch 1, **dadurch gekennzeichnet, dass** in der Mischung als Modifikator Copolymere auf Basis von Acrylaten eingesetzt werden.

4. Verwendung gemäß einem oder mehrerer der vorangegangenen Ansprüche, **dadurch gekennzeichnet, dass** als Polyamid PA 6,6 eingesetzt wird.

5. Verwendung gemäß einem oder mehreren der vorangegangenen Ansprüche, **dadurch gekennzeichnet, dass** als Modifikator Elastomermodifikatoren des EPM, EPDM- und/oder Acrylattyps eingesetzt werden.

6. Verwendung gemäß einem oder mehrerer der vorangegangenen Ansprüche, **dadurch gekennzeichnet, dass** als Mischung 60 bis 84,9 Gewichtsteile PA66 mit 15 bis 39,9 Gewichtsteilen Glasfasern, 0,05 - 2 Gewichtsteile di- oder mehrfunktionellen verzweigend und/oder polymerkettenverlängernd wirkenden Additiven, 0,05 bis 3 Gewichtsteilen Elastomermodifikatoren sowie 0 bis 5 Gewichtsteile sonstiger Additive eingesetzt werden, wobei die Summe aller Gewichtsteile 100 ergibt.

7. Verwendung gemäß Anspruch 1, **dadurch gekennzeichnet, dass** die Formkörper durch Blasformen hergestellt werden.

8. Verwendung gemäß Anspruch 7, **dadurch gekennzeichnet, dass** es sich bei den Formkörpern um Kühlerrohre, Kühlerwasserkästen, Ausgleichsbehälter und andere Medien führende Rohre und Behälter, insbesondere Kfz-Luftführungsrohre und Ölkreislaufrohre und -behälter handelt.

9. Verfahren zur Verbesserung der Hydrolysestabilität thermoplastischer Formmassen und daraus hergestellter Formkörper **dadurch gekennzeichnet, dass** man Mischungen enthaltend 40 bis 89,9 Gewichtsteile eines oder mehreren aliphatischer Polyamide oder Copolyamide, 10 bis 50 Gewichtsteilen Füllstoffe und Verstärkungsstoffe, bevorzugt Glasfasern, 0,05 bis 3 Gewichtsteilen di- oder mehrfunktionellen verzweigend und/oder polymerkettenverlängernd wirkenden Additiven, 0,05 bis 5 Gewichtsteilen Modifikator und 0 bis 5 Gewichtsteile sonstiger nicht verzweigender und nicht polymerkettenverlängernder Additive, wobei die Summe der Gewichtsteile 100 ergibt, einsetzt.

10. Verfahren gemäß Anspruch 9, **dadurch gekennzeichnet, dass** es sich bei dem Polyamid um PA6,6 handelt.

## Claims

1. Use of mixtures containing 40 to 89.9 parts by weight of one or more aliphatic polyamides or copolyamides, 10 to 50 parts by weight of fillers and reinforcing materials, preferably glass fibres, 0.05 to 3 parts by weight of di- or polyfunctional additives with a branching and/or polymer chain extending action, 0.05 to 5 parts by weight of elastomer modifier and 0 to 5 parts by weight of other non-branching and non-polymer-chain-extending additives, the sum of the parts by weight totalling 100, for improving the hydrolysis resistance of thermoplastic moulding compositions and of mouldings produced therefrom.

2. Use according to Claim 1, **characterized in that** the moulding compositions and the mouldings produced therefrom are produced by melt compounding in an extruder.

3. Use according to Claim 1, **characterized in that** copolymers based on acrylates are used as a modifier in the mixture.

4. Use according to one or more of the preceding claims, **characterized in that** the polyamide used is PA66.

5. Use according to one or more of the preceding claims, **characterized in that** elastomer modifiers of the EPM, EPDM and/or acrylate type are used.

6. Use according to one or more of the preceding claims, **characterized in that** the mixture used is 60 to 84.9 parts by weight of PA66 with 15 to 39.9 parts by weight of glass fibres, 0.05 - 2 parts by weight of di- or polyfunctional additives with a branching and/or polymer chain extending action, 0.05 to 3 parts by weight of elastomer modifiers and also 0 to 5 parts by weight of other additives, the sum of all parts by weight totalling 100.

7. Use according to Claim 1, **characterized in that** the mouldings are produced by blow moulding.

8. Use according to Claim 7, **characterized in that** the mouldings comprise radiator pipes, radiator headers, expansion tanks and pipes and containers carrying other media, especially motor vehicle air duct pipes and oil circuit pipes and containers.

9. Process for improving the hydrolytic stability of thermoplastic moulding compositions and mouldings produced therefrom, **characterized in that** mixtures containing 40 to 89.9 parts by weight of one or more aliphatic polyamides or copolyamides, 10 to 50 parts by weight of fillers and reinforcing materials, preferably glass fibres, 0.05 to 3 parts by weight of di- or polyfunctional additives with a branching and/or polymer chain extending action, 0.05 to 5 parts by weight of modifier and 0 to 5 parts by weight of other non-branching and non-polymer-chain-extending additives, the sum of the parts by weight totalling 100, are used.

10. Process according to Claim 9, **characterized in that** the polyamide comprises PA66.

## Revendications

1. Utilisation de mélanges contenant 40 à 89,9 parties en poids d'un ou de plusieurs polyamides ou copolyamides aliphatiques, 10 à 50 parties en poids de charges et de substances de renforcement, de préférence des fibres de verre, 0,05 à 3 parties en poids d'additifs difonctionnels ou polyfonctionnels, ayant un effet de ramification et/ou d'allongement de la chaîne polymère, 0,05 à 5 parties en poids de modificateur élastomère et 0 à 5 parties en poids d'autres additifs sans effet de ramification ni d'allongement de chaîne, la somme des parties en poids étant égale à 100, pour améliorer la résistance à l'hydrolyse de masses de moulage thermoplastiques et des corps façonnés réalisés à partir de celles-ci.

2. Utilisation selon la revendication 1, **caractérisée en ce que** les masses de moulage et les corps façonnés réalisés à partir de celles-ci sont produit(e)s par compoundage en masse fondue dans une extrudeuse.

3. Utilisation selon la revendication 1, **caractérisée en ce qu'**on utilise dans le mélange, comme modificateur, des copolymères à base d'acrylates.

4. Utilisation selon l'une ou plusieurs des revendications précédentes, **caractérisée en ce qu'**on utilise, comme polyamide, du PA6,6.

5. Utilisation selon l'une ou plusieurs des revendications précédentes, **caractérisée en ce qu'**on utilise comme modificateur des modificateurs élastomères du type EPM, EPDM et/ou acrylate.

6. Utilisation selon l'une ou plusieurs des revendications précédentes, **caractérisée en ce qu'**on utilise comme mélange 60 à 84,9 parties en poids de PA66 avec 15 à 39,9 parties en poids de fibres de verre, 0,05-2 parties en poids d'additifs difonctionnels ou polyfonctionnels ayant un effet de ramification et/ou d'allongement de la chaîne polymère, 0,05 à 3 parties en poids de modificateurs élastomères ainsi que 0 à 5 parties en poids d'autres additifs, la somme de toutes les parties en poids étant égale à 100.

7. Utilisation selon la revendication 1, **caractérisée en ce que** les corps façonnés sont réalisés par moulage par soufflage.

8. Utilisation selon la revendication 7, **caractérisée en ce qu'**il s'agit, pour les corps façonnés, de tubes de refroidissement, de carters d'eau de refroidissement, de récipients de compensation et de tubes et de récipients guidant d'autres agents, en particulier de tuyaux de guidage de l'air de moteur et de tuyaux et de récipients pour les circuits à huile.

9. Procédé pour améliorer la stabilité à l'hydrolyse de masses de moulage thermoplastiques et de corps façonnés réalisés à partir de celles-ci, **caractérisé en ce qu'**on utilise des mélanges contenant 40 à 89,9 parties en poids d'un ou de plusieurs polyamides ou copolyamides aliphatiques, 10 à 50 parties en poids de charges et de substances de renforcement, de préférence des fibres de verre, 0,05 à 3 parties en poids d'additifs difonctionnels ou polyfonctionnels, ayant un effet de ramification et/ou d'allongement de la chaîne polymère, 0,05 à 5 parties en poids de modificateur et 0 à 5 parties en poids d'autres additifs sans effet de ramification ni d'allongement de chaîne, la somme des parties en poids étant égale à 100.

10. Procédé selon la revendication 9, **caractérisé en ce qu'**il s'agit, pour le polyamide, de PA6,6.
